# EUROPEAN PATENT APPLICATION

(11) **EP 4 848 235 A1**
(43) Date of publication of application: **02.12.2026**
(21) Application number: 26181386.9
(22) Date of filing: 27.05.2026
(51) Int. Cl.: G06V 20/56, G06V 10/80

(54) **TARGET FUSION METHOD, PATH PLANNING METHOD, ELECTRONIC DEVICE, AND PRODUCT**

(30) Priority: 29.05.2025 CN 202510712568
(71) Applicant: Robert Bosch GmbH, 70442 Stuttgart (DE)
(72) Inventor: XIA, Sijun, Suzhou, Jiangsu, 215021 (CN)

(57) **Abstract**

The present disclosure provides a target fusion method, a path planning method, an electronic device, and a computer program product. The target fusion method comprises the following steps: obtaining scene data of a current frame and multiple historical frames of an autonomous driving device, wherein the scene data originates from multiple different perception components and includes initial target bounding boxes representing perceived targets; constructing an initial target feature matrix based on the initial target bounding boxes; inputting the initial target feature matrix into a Transformer neural network to determine and output fused predicted target features, wherein the predicted target features include target static features and target dynamic features. The target fusion method can achieve accurate target fusion and precise capture of static and dynamic features of the target.

## Description

### Technical Field

The present disclosure relates to the field of autonomous driving technology, and specifically to a target fusion method, a path planning method, an electronic device, and a computer program product.

### Background Art

In autonomous driving scenarios, the same target in the environment may be detected by multiple different perception components. These perception components differ in installation position, perception range, perception accuracy, and even type, which poses challenges in fusing different perception results and determining the most accurate perceived target.

It should be noted that the content introduced herein is merely intended to provide background information related to the present disclosure and does not necessarily constitute prior art.

### Summary of the Invention

In view of this, the present disclosure aims to provide a target fusion method for an autonomous driving device, which can accurately fuse multi-source perception data and capture target features.

Furthermore, the present disclosure also aims to solve or alleviate other technical problems existing in the prior art.

According to a first aspect of the present disclosure, a target fusion method is provided, comprising the following steps:
obtaining scene data of a current frame and multiple historical frames of an autonomous driving device, wherein the scene data originates from multiple different perception components and includes initial target bounding boxes representing perceived targets;
based on the initial target bounding boxes, constructing an initial target feature matrix;
inputting the initial target feature matrix into a Transformer neural network to determine and output fused predicted target features, wherein the predicted target features include target static features and target dynamic features.

In some embodiments of the target fusion method, optionally, constructing the initial target feature matrix based on the initial target bounding boxes comprises the following steps:
based on the initial target bounding boxes of each frame, respectively determining initial target features, which include: Initial target pose features, ego-pose transformation matrices from historical frames to the current frame, initial target type features, and perception component features;
performing feature extraction based on the initial target features and generating the initial target feature matrix.

In some embodiments of the target fusion method, optionally, the initial target features further include positional encoding calculated based on the initial target pose features and timestamp information associated with the initial target pose features.

In some embodiments of the target fusion method, optionally, performing feature extraction based on the initial target features and generating the initial target feature matrix comprises the following steps:
based on the initial target pose features, ego-pose transformation matrices from historical frames to the current frame, initial target type features, and perception component features of all frames, constructing a first matrix;
based on the initial target pose features, timestamp information, and positional encoding of all frames, constructing a second matrix;
based on the initial target type features and perception component features of all frames, constructing a third matrix;
performing feature extraction on the first matrix, the second matrix, and the third matrix, and generating a preset dimension matrix as the initial target feature matrix.

In some embodiments of the target fusion method, optionally, the initial target pose features include:
position features of the initial target bounding box in the ego vehicle coordinate system, comprising distance features, angle features, and coordinate features of the center of the initial target bounding box relative to the origin of the ego vehicle coordinate system;
size features of the initial target bounding box, comprising length, width, and height of the target represented by the initial target bounding box; and
position features of the initial target bounding box in Bird's Eye View (BEV), comprising distance features from corner points of the initial target bounding box to its center.

In some embodiments of the target fusion method, optionally, the Transformer neural network comprises an encoder component and a decoder component, wherein:
The queries, keys, and values of the multi-head attention included in the encoder component are derived based on the initial target feature matrix for all frames;
The queries of the multi-head attention included in the decoder component are derived based on the initial target feature matrix for the current frame, while its keys and values are derived based on the output of the encoder component.

In some embodiments of the target fusion method, optionally, the target static features of the predicted target features include: target existence probability labels, target position labels in the ego vehicle coordinate system, and target size labels;
and/or, the target dynamic features of the predicted target features include: target velocity labels, target motion probability labels, and target forward probability labels.

In some embodiments of the target fusion method, optionally, the method further comprises the following steps:
according to the Hungarian algorithm, matching the fused predicted target features with ground truth, and performing loss calculation based on the matching pairs of predicted target features and ground truth, wherein the loss calculation results are used for retraining the Transformer neural network.

In some embodiments of the target fusion method, optionally, starting from the current frame, multiple historical frames are selected with gradually increasing time intervals.

In some embodiments of the target fusion method, optionally, starting from the current frame, multiple historical frames are selected with exponentially increasing time intervals.

In some embodiments of the target fusion method, optionally, the perception components are selected from the following group: Camera, Lidar, Millimeter-wave Radar, Ultrasonic Radar.

According to a second aspect of the present disclosure, a path planning method for an autonomous driving device is provided, comprising the following steps:
obtaining scene data of a current frame and multiple historical frames of an autonomous driving device, wherein the scene data originates from multiple different perception components and includes initial target bounding boxes representing perceived targets;
based on the initial target bounding boxes, constructing an initial target feature matrix;
inputting the initial target feature matrix into a Transformer neural network to determine and output fused predicted target features, wherein the predicted target features include target static features and target dynamic;
based on the fused predicted target features, performing path planning.

In some embodiments of the path planning method, optionally, the path planning method is used for Adaptive Cruise Control, Traffic Jam Assist, Navigate on Autopilot, Automatic Parking Assist, or Auto Lane Change of the autonomous driving device.

According to a third aspect of the present disclosure, an electronic device is provided, comprising a memory, a processor, and a computer program stored in the memory and executable on the processor, wherein the processor executes the computer program to implement any of the above target fusion methods.

In some embodiments of the electronic device, optionally, the electronic device is one of a front-view camera, millimeter-wave radar, or domain controller.

According to a fourth aspect of the present disclosure, a computer program product is provided, comprising a computer program, wherein when the computer program is executed by a processor, it implements any of the above target fusion methods.

Herein, according to some embodiments, the target fusion method can achieve accurate target fusion and precise capture of static and dynamic features of the target.

### Description of Accompanying Drawings

With reference to the accompanying drawings, the above and other features of the present disclosure will become apparent, wherein:
FIG. 1 shows a flowchart of an implementation of a target fusion method according to the present disclosure;
FIG. 2 shows a flowchart of another implementation of the target fusion method according to the present disclosure;
FIG. 3 shows a schematic diagram of an encoder component and a decoder component of an applied Transformer neural network;
FIG. 4 shows a flowchart of an implementation of a path planning method according to the present disclosure;
FIG. 5 shows a schematic block diagram of an electronic device according to the present disclosure.

### Detailed Description

The present disclosure is described more fully below with reference to the accompanying drawings, which illustrate exemplary embodiments of the present disclosure. However, the present disclosure may be implemented in different forms and should not be construed as limited to the embodiments set forth herein. The above-described embodiments are provided to make this disclosure thorough and complete, and to more fully convey the scope of protection of the present disclosure to those skilled in the art.

In this specification, terms such as "comprising" and "including" indicate that, in addition to the units and steps explicitly and directly expressed in the specification and claims, the technical solution of the present disclosure does not exclude the presence of other units or steps that are not directly or explicitly expressed.

Unless otherwise specified, terms such as "first" and "second" do not indicate an order in time, space, size, etc., of the units, but are merely used to distinguish between the units.

To acquire scene data about the surrounding environment, an autonomous driving device is typically provided with multiple perception components, such as a front-side perception component, a rear-side perception component, and a side perception component. Consequently, the scene data is composed of multiple heterogeneous data sources, where the same target can be detected simultaneously by multiple perception components. The perception components may differ in type due to their installation positions, for example, an image sensor and a radar sensor may be installed simultaneously, or they may differ in configuration parameters, such as in perception range and perception accuracy. If the scene data is directly input into a downstream module (e.g., a path planning module) for data reprocessing, there may be deficiencies in computational power consumption and accuracy. Conversely, if target fusion processing is performed on the scene data before inputting it to the downstream module, using a weight function designed based on experience, this not only requires a large amount of prior logic for support in the early stage, but also has certain limitations, poor robustness, and may make it difficult to provide accurate target features.

Therefore, instead of common target fusion methods that rely on empirical design and a large number of hyperparameters, the present disclosure proposes a data-driven target fusion method based on a Transformer neural network (hereinafter also referred to as a model), through which accurate fused targets, including their static and dynamic features, can be obtained.

Before describing the present disclosure in detail with reference to the accompanying drawings, it should be noted that the autonomous driving device mentioned herein may involve, but is not limited to, automobiles (including new energy vehicles and traditional fuel vehicles), aircraft, and watercraft. Furthermore, the mentioned targets should be understood as obstacles in the surrounding environment of the autonomous driving device, including static obstacles and dynamic obstacles. Taking the autonomous driving device as an automobile as an example, the obstacles may involve cars, non-motor vehicles, pedestrians, road facilities, etc., which are not specifically limited in the embodiments of the present disclosure.

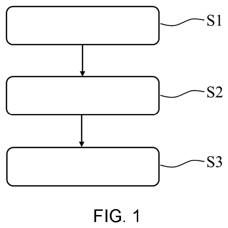

FIG. 1 shows a flowchart of an implementation of the target fusion method according to the present disclosure. The target fusion method comprises the following steps:
S1: obtaining scene data of a current frame and multiple historical frames of an autonomous driving device,
S2: based on the initial target bounding boxes, constructing an initial target feature matrix;
S3: inputting the initial target feature matrix into a Transformer neural network to determine and output fused predicted target features, wherein the predicted target features include target static features and target dynamic features.

First, regarding step S1. The multiple different perception components may be selected from the following group, comprising: Camera, Lidar, Millimeter-wave Radar, Ultrasonic Radar. Wherein, the mentioned camera includes devices for capturing images or videos, such as a telephoto camera, a short-focus camera, a wide-angle camera, and a fisheye camera. The scene data characterizes the surrounding environment features of the autonomous driving device and includes all initial target bounding boxes detected by the associated multiple perception components. That is, the scene data used for target fusion is presented in the form of such initial target bounding boxes, particularly in an ego-coordinate system. The initial target bounding box is derived based on image data or point cloud data of the perception component. By way of example only, for image data, the initial target bounding box is generated through a combination of sliding window and feature extraction. By way of example only, for point cloud data, the initial target bounding box is generated through a voxel-based algorithm. Here, the initial target bounding box for the detected target may be, for example, called from an upstream module (e.g., a detection module) in the control system of the autonomous driving device, but calculation within the scope of some embodiments of the target fusion method according to the present disclosure is not excluded.

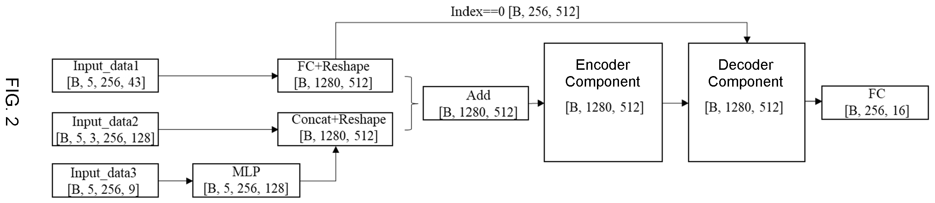

FIG. 2 shows, in a block diagram, another implementation of the target fusion method according to the present disclosure, wherein, in step S1, scene data of 5 frames is obtained, including scene data of a current frame and four historical frames. In some embodiments, starting from the current frame, the multiple historical frames are selected with gradually increasing time intervals between adjacent frames, i.e., the historical frames are selected in a manner of being dense in the near term and sparse in the far term. Thus, it is beneficial for a rapid response to the target motion state and for smoothing target jitter.

In some embodiments, in the time series direction from the current frame towards the historical frames, the multiple historical frames are selected with exponentially increasing time intervals, wherein the time interval can be understood analogously to the frame number difference, i.e., the frame number difference of the selected adjacent frames increases exponentially.

Exemplarily, starting from the current frame, the time interval gradually increases by a factor of two. For example, starting from the current frame (denoted as t), the four historical frames are selected with time intervals of 1 frame, 2 frames, 4 frames, and 8 frames sequentially, i.e., the (t-1)-th frame, the (t-3)-th frame, the (t-7)-th frame, and the (t-15)-th frame are selected as the historical frames.

Here, exemplarily, it is feasible that the value of the above time interval and the multiple value can be selected according to a preset time window (e.g., 1 second), the sampling frequency of the perception component, and the number of historical frames to be selected. Wherein, given the preset time window, an increase in the sampling frequency or a decrease in the number of historical frames to be selected causes the value of the time interval and the multiple value to increase.

Exemplarily, it is also feasible that the trend of the time interval is determined based on an evaluation result of the historical scene data, wherein the evaluation result characterizes a change state of the historical scene data and can be called from other control modules of the autonomous driving device. For example, if the evaluation result shows that the historical scene data changes rapidly, the multiple historical frames can be selected with a time interval having a slower increasing trend.

The left half of FIG. 2 shows an implementation of step S2 "based on the initial target bounding boxes, constructing an initial target feature matrix", wherein the initial target feature matrix is used for input into the Transformer neural network to obtain fused predicted target features. In FIG. 2, the initial target feature matrix is a preset dimension matrix generated based on a first matrix Input_data1, a second matrix Input_data2, and a third matrix Input_data3.

Regarding the first matrix Input_data1, it includes: initial target pose features, ego-pose transformation matrices from historical frames to the current frame, initial target type features, and perception component features.

Wherein, the initial target pose features should be understood as the position features of the target represented by the initial target bounding box relative to the autonomous driving device, as well as its own features. In some embodiments, the position features include:
a distance feature of the center of the initial target bounding box relative to the origin of the ego vehicle coordinate system, which is, for example, the distance value from the center of the initial target bounding box (i.e., the target it represents) to the origin of the ego vehicle coordinate system, denoted as norm(x, y, z);
an angle feature of the center of the initial target bounding box relative to the origin of the ego vehicle coordinate system, which, for example, includes: a value of a yaw angle of the initial target bounding box (i.e., the target it represents) in the ego vehicle coordinate system, denoted as yaw; a sine value of the yaw angle, denoted as sin(yaw); a cosine value of the yaw angle, denoted as cos(yaw); and
a coordinate feature of the center of the initial target bounding box in the ego vehicle coordinate system, which, for example, includes: coordinate values of the initial target bounding box (i.e., the target it represents) in the ego vehicle coordinate system with respect to an x-axis (parallel to a forward direction of the autonomous driving device), a y-axis (parallel to a lateral direction of the autonomous driving device and perpendicular to the x-axis), and a z-axis (perpendicular to the x-axis and the y-axis). In some embodiments, the coordinate features include normalized coordinate values with respect to the x-axis and the y-axis (which may be obtained by dividing by a maximum sensing range among the plurality of perception components), denoted as norm(x) and norm(y); and include unnormalized coordinate values, denoted as z.

Regarding the initial target pose features, the own features of the target represented by the initial target bounding box include, on the one hand, its length L, width W, and height H. On the other hand, the own features further include position features of the initial target bounding box in a Bird's Eye View (BEV), i.e., distance features from corner points of the initial target bounding box to its center in the BEV, which may be represented by a combination of a distance value with respect to an x-axis of the BEV and a distance value with respect to a y-axis of the BEV. Specifically, when the initial target bounding box is a quadrilateral, the own features include four sets of values (i.e., 8 values), denoted as (del_x1, del_y1, del_x2, del_y2, del_x3, del_y3, del_x4, del_y4).

The initial target type features are used to characterize a type of the target represented by the initial target bounding box, which may be, for example, retrieved from an upstream module, or calculated within the scope of some embodiments of the target fusion method according to the present disclosure. In some embodiments, the initial target type features may be encoded by a four-bit binary value, the binary value corresponding to the type of the initial target, denoted as (Ty1, Ty2, Ty3, Ty4).

The perception component features are used to locate its installation position on the autonomous driving device. In some embodiments, they may be encoded by a four-bit binary value, the binary value corresponding to the perception component, denoted as (Se1, Se2, Se3, Se4).

Furthermore, to calculate dynamic features of the target, targets from historical frames are transformed to the ego vehicle coordinate system of the current frame by means of the ego vehicle pose transformation matrix. The ego vehicle pose transformation matrix is, for example, represented as a 4x4 matrix, which may be flattened into a one-dimensional vector and includes 16 values.

In the embodiment shown in FIG. 2, the first matrix Input_data1 is derived for scene data of 5 frames, wherein each frame is set to have a maximum of 256 targets, and a dimension of each target feature is 43, which, in addition to the 42 values described above, further includes a target confidence conf (used to indicate a probability of the target's existence). That is, the dimension of the first matrix Input_data1 is [B, 5, 256, 43], where B is a batch size for model training and is typically 1 during actual fusion calculation.

Regarding the second matrix Input_data2, in some embodiments, it is calculated by: calculating a corresponding positional encoding based on norm(x), norm(y) among the above-mentioned initial target pose features of each frame, and associated timestamp information (specifically, del_t/(2*pi), where del_t is a time interval of the historical frame relative to the current frame), and then each target feature correspondingly generates a 128-dimensional vector. Thus, in the embodiment shown in FIG. 2, the dimension of the second matrix Input_data2 is [B, 5, 3, 256, 128]. The positional encoding may be calculated using a common positional encoding formula in Transformers. This calculation process may be performed outside the established Transformer neural network, i.e., performing the above positional encoding in advance based on a preset calculation method can reduce the difficulty of model learning and thereby optimize the training process.

Regarding the third matrix Input_data3, in some embodiments, it is generated based on the initial target type features and the perception component features of each frame. The dimension of the third matrix Input_data3 is [B, 5, 256, 9], where a dimension of each target feature is 9, i.e., including conf, Ty1, Ty2, Ty3, Ty4, Se1, Se2, Se3, Se4 as defined above.

Here, the initial target feature matrix for subsequent input into the Transformer neural network is constructed based on the above three matrices. By means of the second matrix, the Transformer neural network can be endowed with a positional concept of the target on the basis of the first matrix. The third matrix strengthens the association relationship between different perception components and target type features, thereby reducing the difficulty of model learning and optimizing the model training process.

It can also be seen from FIG. 2 that the first matrix, the second matrix, and the third matrix are subsequently processed into a preset dimension matrix [B, 1280, 512]. Here, this may involve, but is not limited to, feature extraction in a neural network based on a Fully Connected Layer (FC layer), a Reshape layer, a Concatenate Layer (Concat layer), and a Multi-Layer Perceptron (MLP).

Specifically, through the FC layer and the Reshape layer, the dimension of the first matrix Input_data1 is converted from [B, 5, 256, 43] to [B, 1280, 512]; through the MLP, the dimension of the third matrix Input_data3 is converted from [B, 5, 256, 9] to [B, 5, 256, 128], wherein the MLP is a feedforward neural network structure and is formed by stacking multiple FC layers and ReLU layers; through the Concat layer, the second matrix Input_data2 with dimension [B, 5, 3, 256, 128] and the third matrix Input_data3 with dimension [B, 5, 256, 128] are concatenated into a dimension of [B, 5, 4, 256, 128], and then converted into a dimension of [B, 1280, 512] through the Reshape layer, which is then added to the first matrix Input_data1 with dimension [B, 1280, 512] to obtain the initial target feature matrix of the aforementioned preset dimension [B, 1280, 512].

Here, compared to the scene data combination {x, y, z, L, W, H, yaw, type, conf} commonly used in target fusion methods, where x, y, z correspond to the coordinates of the target represented by the initial target bounding box in the ego vehicle coordinate system; L, W, H correspond to the length, width, and height of the target represented by the initial target bounding box; yaw corresponds to the orientation angle of the target represented by the initial target bounding box in the ego vehicle coordinate system; type corresponds to the type of the target represented by the initial target bounding box; conf corresponds to the target confidence indicating the likelihood of the target's existence, the initial target feature matrix obtained through feature extraction in the above manner can achieve a more accurate target fusion effect.

Alternatively, it is also feasible that the positional encoding involved in the second matrix may be performed within the Transformer neural network, i.e., the initial target feature matrix input into the model is generated based on the first matrix and the third matrix, whereby the model can effectively distinguish different targets based on the positional encoding.

Here, it should be noted that the dimension and feature extraction method of the initial target feature matrix input into the Transformer neural network are not limited to the embodiments described above, and may be modified as needed.

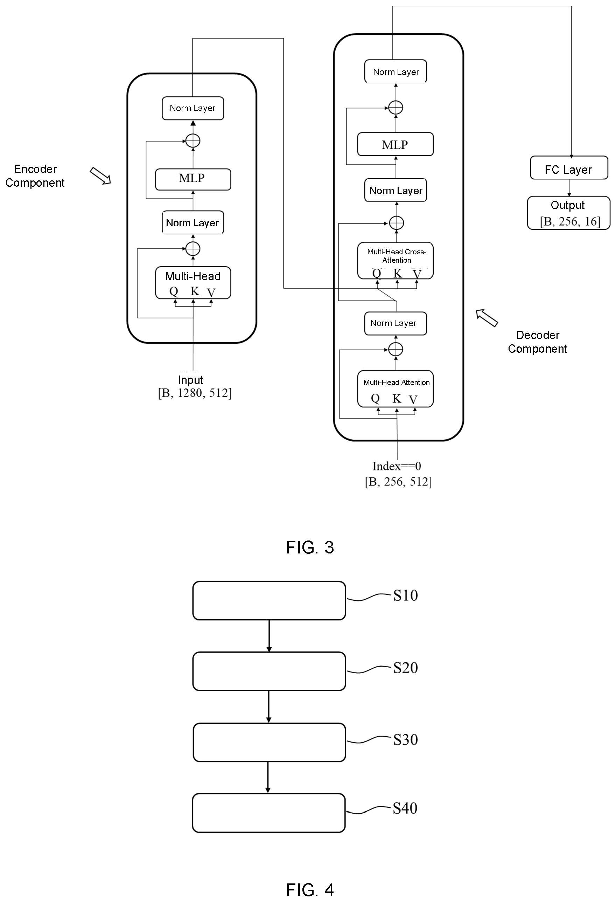

With reference to Figures 2 and 3, the above step S3, particularly an embodiment of the model constructed within the scope of the present disclosure, is described in detail. The encoder component of the Transformer neural network includes multiple encoder layers, e.g., two layers, three layers, or more, and the decoder component includes multiple decoder layers, e.g., two layers, three layers, or more. The number of encoder layers and decoder layers may be selected accordingly based on computational power requirements; for clarity, only one encoder layer and one decoder layer are shown in Figure 3.

The encoder layer sequentially includes multi-head attention, a Norm layer, an MLP, and a Norm layer. Here, the Q (Query), K (Key), and V (Value) of the multi-head attention included in the encoder layer are derived based on the input initial target feature matrix for 5 frames with dimension [B, 1280, 512].

The decoder layer includes multi-head attention, a Norm layer, multi-head cross-attention, an MLP, and a Norm layer. The Q (Query) of the multi-head attention and multi-head cross-attention included in the decoder layer is derived from the first matrix (with corresponding dimension [B, 256, 512]) only for the current frame (i.e., when Index==0), while its K (Key) and V (Value) are derived based on the output of the upstream encoder component (with corresponding dimension [B, 1280, 512]). Compared to common decoder layers where the Q (Query) of multi-head attention is derived from the output of the decoder component and is learnable, here the target feature data of the current frame is used as Q, so that there is a basis for result searching, avoiding fabrication, and only offset calculation is required, omitting the common masked multi-head attention, thereby achieving more accurate result searching with less computation.

It can also be seen from Figure 3 that an FC layer is provided downstream of the decoder component, which correspondingly outputs the fused predicted target features for use by a downstream path planning module.

In some embodiments, the output fused predicted target features include:
target static features, which may include a target existence probability label, a target position label in the ego vehicle coordinate system, and a target size label;
target dynamic features, which may include: target velocity labels, target motion probability labels, and target forward probability labels.

In a specific embodiment, the fused predicted target feature matrix has 16 dimensions, correspondingly represented as [score, offset_x, offset_y, offset_z, L, W, H, sin(yaw), cos(yaw), sin(yaw*n), cos(yaw*n), speed, sin(speed), cos(speed), motion_prob, forward_prob],
wherein score is the target existence probability label, with a value range of [0, 1], e.g., a smaller value indicates a lower likelihood of target existence;
offset_x, offset_y, offset_z belong to the target position label, representing the position offset of the fused target in the ego vehicle coordinate system;
L, W, H are the target size labels;
sin(yaw), cos(yaw), sin(yaw*n), cos(yaw*n) belong to the target position label, representing the orientation angle of the fused target in the ego vehicle coordinate system, where n is an integer greater than 1 and its value may be selected as needed;
speed, sin(speed), cos(speed) are the target velocity labels;
motion_prob is the target motion probability label, with a value range of [0, 1], e.g., a smaller value indicates a lower likelihood of target motion;
forward_prob is the target forward probability label, with a value range of [0, 1], e.g., a value closer to 1 indicates a higher likelihood of the target moving forward.

On one hand, the introduction of the target existence probability label score into the 16-dimensional predicted target feature matrix helps to eliminate targets with lower existence probability during path planning calculations, balancing computational accuracy and resource consumption. On the other hand, the introduction of sin(yaw*n) and cos(yaw*n) can avoid calculation errors caused by the orientation angle being too small.

Here, it should be noted that the above embodiment of the predicted target feature matrix is given only exemplarily based on a vehicle path planning application scenario and does not include a target type label. However, embodiments of the present disclosure do not exclude the predicted target feature matrix from including the target type label or other types of labels.

In other embodiments, the fused predicted target features may be displayed on a terminal device, for example, presented as fused predicted target bounding boxes, or presented in a combination of the predicted target bounding boxes and a portion of the aforementioned labels (e.g., target velocity labels or target position labels).

Furthermore, in other implementations, the target fusion method further comprises the following steps:
S4: according to the Hungarian algorithm, matching the fused predicted target features with ground truth, and performing loss calculation based on the matching pairs of predicted target features and ground truth, wherein the loss calculation results are used for retraining the Transformer neural network.

Specifically, when using the Hungarian algorithm for matching, a cost matrix is constructed between the fused predicted target features (also referred to as predictions) and the ground truth (GT), and matching pairs with optimal cost are sought in a bipartite graph based on this matrix. Here, a comprehensive cost is calculated by combining the BEV IoU cost (cost_IoU) and the Focal cost (cost_cls), where cost_IoU is the geometric similarity cost for the Intersection over Union (IoU) of target bounding boxes in BEV; cost_cls is the category similarity cost between the target type (which, if the predicted target features do not include a target type label, may adopt the initial target type features from the initial target feature matrix, i.e., the input information of the Transformer neural network) and the ground truth. The comprehensive cost can be expressed as: $cost = 1 - \left(ω⋅cost_IoU+\left(1-ω\right)⋅cost_cls\right)$ (1) where ω is a weight.

Here, through end-to-end global matching based on the Hungarian algorithm, global optimal matching is achieved without manually designing matching rules.

Subsequently, loss calculation is performed on the matching pairs of predicted target features and ground truth (GT). In some implementations, losses are calculated separately for labels of different attributes in the predicted target features, and the total loss is obtained by weighted summation. Specifically, a first loss term (Loss 1) is calculated for the aforementioned target existence probability label based on the Focal Loss function; a second loss term (Loss 2) is calculated for the offset label among the position labels based on the L1 Loss function (i.e., Mean Absolute Error Loss Function); a third loss term (Loss 3) is calculated for the target size label based on the L1 Loss function; a fourth loss term (Loss 4) is calculated for the orientation angle label among the position labels based on the L1 Loss function; a fifth loss term (Loss 5) is calculated for the target velocity label based on the L1 Loss function; a sixth loss term (Loss 6) is calculated for the target motion probability label based on the L1 Loss function; a seventh loss term (Loss 7) is calculated for the target forward probability label based on the L1 Loss function. The seven loss terms are weighted and summed to obtain the total loss. The total loss is used for backpropagation into the constructed Transformer neural network to achieve retraining and optimization thereof.

Next, according to a second aspect of the present disclosure, a path planning method for an autonomous driving device is also proposed. In the implementation shown in FIG. 4, the method comprises the following steps:
S10: obtaining scene data of a current frame and multiple historical frames of an autonomous driving device, wherein the scene data originates from multiple different perception components and includes initial target bounding boxes representing perceived targets;
S20: based on the initial target bounding boxes, constructing an initial target feature matrix;
S30: inputting the initial target feature matrix into a Transformer neural network to determine and output fused predicted target features, wherein the predicted target features include target static features and target dynamic;
S40: based on the fused predicted target features, performing path planning.

Wherein, steps S10, S20, and S30 are performed according to any implementation of the target fusion method described above, thereby enabling the path planning method to possess the features and advantages of the target fusion method. Wherein, during path planning, target fusion may be performed correspondingly for each tracking trajectory and scene data, and subsequent path planning is performed based on the target fusion. Here, by performing target fusion based on the Transformer neural network and accurately capturing target static and dynamic features, relatively accurate environmental perception is provided for path planning, thereby improving autonomous driving safety.

Here, taking the autonomous driving device as a vehicle as an example, the path planning method can be used for Adaptive Cruise Control (ACC), Traffic Jam Assist (TJA), Navigate on Autopilot (NOA), Automatic Parking Assist (APA), or Auto Lane Change (ALC) of the vehicle. Furthermore, it should be noted that the present disclosure does not exclude using the path planning method for other control functions of the vehicle (e.g., Lane Centering Assist), safety functions (e.g., Automatic Emergency Braking), parking functions (e.g., Remote Parking or Memory Parking), or other special scenario functions (e.g., Hands-Free Driving).

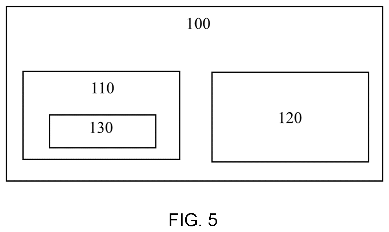

Next, FIG. 5 shows an electronic device 100 proposed according to another aspect of the present disclosure. The electronic device comprises a memory 110, a processor 120, and a computer program 130 stored in the memory 110 and executable on the processor 120, wherein the processor 120 executes the computer program 130 to implement the target fusion method according to at least one of the above implementations. Here, the electronic device may be one of a front-view camera, millimeter-wave radar, or domain controller.

Here, the features and advantages already described in connection with the target fusion method according to the present disclosure can be particularly derived for the electronic device according to the present disclosure, and reference may be made accordingly to the explanations provided therefor.

Finally, the present disclosure also proposes a computer program product comprising a computer program, wherein when the computer program is executed by a processor, it implements the target fusion method according to at least one of the above implementations. Here, the features and advantages already described in connection with the target fusion method according to the present disclosure can be particularly derived for the computer program product according to the present disclosure, and reference may be made accordingly to the explanations provided for both.

Here, the embodiments and examples presented herein are provided to illustrate the present disclosure and embodiments of its specific application, thereby enabling those skilled in the art to make and use the present disclosure. However, those skilled in the art should understand that the above description and examples are provided for convenience of illustration and example only. The presented description is not intended to cover all aspects of the present disclosure or to limit the present disclosure to the precise forms disclosed.

## Claims

1. A target fusion method, **characterized by** comprising the following steps:
obtaining scene data of a current frame and multiple historical frames of an autonomous driving device, wherein the scene data originates from multiple different perception components and includes initial target bounding boxes representing perceived targets;
based on the initial target bounding boxes, constructing an initial target feature matrix;
inputting the initial target feature matrix into a Transformer neural network to determine and output fused predicted target features, wherein the predicted target features include target static features and target dynamic features.

2. The target fusion method according to Claim 1, **characterized in that** constructing the initial target feature matrix based on the initial target bounding boxes comprises the following steps:
based on the initial target bounding boxes of each frame, respectively determining initial target features, which include: Initial target pose features, ego-pose transformation matrices from historical frames to the current frame, initial target type features, and perception component features;
performing feature extraction based on the initial target features and generating the initial target feature matrix.

3. The target fusion method according to Claim 2, **characterized in that** the initial target features further include positional encoding calculated based on the initial target pose features and timestamp information associated with the initial target pose features.

4. The target fusion method according to Claim 3, **characterized in that** performing feature extraction based on the initial target features and generating the initial target feature matrix comprises the following steps:
based on the initial target pose features, ego-pose transformation matrices from historical frames to the current frame, initial target type features, and perception component features of all frames, constructing a first matrix;
based on the initial target pose features, timestamp information, and positional encoding of all frames, constructing a second matrix;
based on the initial target type features and perception component features of all frames, constructing a third matrix;
performing feature extraction on the first matrix, the second matrix, and the third matrix, and generating a preset dimension matrix as the initial target feature matrix.

5. The target fusion method according to Claim 2, **characterized in that** the initial target pose features include:
position features of the initial target bounding box in the ego vehicle coordinate system, comprising distance features, angle features, and coordinate features of the center of the initial target bounding box relative to the origin of the ego vehicle coordinate system;
size features of the initial target bounding box, comprising length, width, and height of the target represented by the initial target bounding box; and
position features of the initial target bounding box in Bird's Eye View (BEV), comprising distance features from corner points of the initial target bounding box to its center.

6. The target fusion method according to Claim 1, **characterized in that** the Transformer neural network comprises an encoder component and a decoder component, wherein:
The queries, keys, and values of the multi-head attention included in the encoder component are derived based on the initial target feature matrix for all frames;
The queries of the multi-head attention included in the decoder component are derived based on the initial target feature matrix for the current frame, while its keys and values are derived based on the output of the encoder component.

7. The target fusion method according to Claim 1, **characterized in that** the target static features of the predicted target features include: target existence probability labels, target position labels in the ego vehicle coordinate system, and target size labels;
and/or, the target dynamic features of the predicted target features include: target velocity labels, target motion probability labels, and target forward probability labels.

8. The target fusion method according to claim 1, **characterized by** further comprising the following steps:
according to the Hungarian algorithm, matching the fused predicted target features with ground truth, and performing loss calculation based on the matching pairs of predicted target features and ground truth, wherein the loss calculation results are used for retraining the Transformer neural network.

9. The target fusion method according to Claim 1, **characterized in that** starting from the current frame, multiple historical frames are selected with gradually increasing time intervals.

10. The target fusion method according to Claim 9, **characterized in that** starting from the current frame, multiple historical frames are selected with exponentially increasing time intervals.

11. The target fusion method according to claim 1, **characterized in that** the perception components are selected from the following group: Camera, Lidar, Millimeter-wave Radar, Ultrasonic Radar.

12. A path planning method for an autonomous driving device, **characterized by** comprising the following steps:
obtaining scene data of a current frame and multiple historical frames of an autonomous driving device, wherein the scene data originates from multiple different perception components and includes initial target bounding boxes representing perceived targets;
based on the initial target bounding boxes, constructing an initial target feature matrix;
inputting the initial target feature matrix into a Transformer neural network to determine and output fused predicted target features, wherein the predicted target features include target static features and target dynamic;
based on the fused predicted target features, performing path planning.

13. The path planning method according to Claim 12, **characterized in that** the path planning method is used for Adaptive Cruise Control, Traffic Jam Assist, Navigate on Autopilot, Automatic Parking Assist, or Auto Lane Change of the autonomous driving device.

14. An electronic device comprising a memory, a processor, and a computer program stored in the memory and executable on the processor, **characterized in that** the processor executes the computer program to implement the target fusion method according to any one of Claims 1 to 11.

15. The electronic device according to claim 14, **characterized in that** the electronic device is one of a front-view camera, millimeter-wave radar, or domain controller.

16. A computer program product comprising a computer program, **characterized in that** when the computer program is executed by a processor, it implements the target fusion method according to any one of Claims 1 to 11.
